# EUROPEAN PATENT APPLICATION

(11) **EP 4 704 197 A1**
(43) Date of publication of application: **04.03.2026**
(21) Application number: 24218771.4
(22) Date of filing: 10.12.2024
(51) Int. Cl.: H01M 10/04, H01M 4/04, H01M 4/139, H01M 4/66

(54) **BATTERY ALUMINUM FOIL COATING DEVICE, BATTERY ALUMINUM FOIL COATING METHOD, CURRENT COLLECTOR AND BATTERY**

(30) Priority: 27.08.2024 CN 202411186900; 30.09.2024 WO PCT/CN2024/122659
(71) Applicant: Qujing Yiwei Lithium Energy Co., Ltd., Qujing Yunnan 655000 (CN)
(72) Inventor: MA, Xiangran, Qujing, Yunnan 655000 (CN); DING, Pengchong, Qujing, Yunnan 655000 (CN); WU, Wenjun, Qujing, Yunnan 655000 (CN); LI, Heng, Qujing, Yunnan 655000 (CN); LIU, Jincheng, Qujing, Yunnan 655000 (CN)
(74) Representative: Berggren Oy

(57) **Abstract**

A battery aluminum foil coating device (4), a battery aluminum foil coating method, a current collector (5) and a battery (6) are provided. By sequentially passing the aluminum foil through an unwinding mechanism (41), a double-sided coating assembly (42), a first-sided coating assembly (43), a second-sided coating assembly (44) and a winding mechanism (45) to complete double-sided coating, the aluminum foil carbon layer coating process and the electrode slurry coating process may be combined, production cost may be reduced, production cycle may be shortened, and resource waste may be reduced.

## Description

### TECHNICAL FIELD

The present disclosure relates to the technical field of batteries, in particular to a battery aluminum foil coating device, a battery aluminum foil coating method, a current collector and a battery.

### BACKGROUND

At present, the use of functional coatings to surface treatment of battery conductive substrates is a breakthrough technological innovation. Carbon-coated aluminum foil or copper foil is to uniformly and finely coat dispersed nano-conductive graphite and carbon-coated particles on the aluminum foil or on the copper foil. Nano-conductive graphite and carbon-coated particles may provide good static conductivity, collect micro-currents of active materials, improve the processing performance of battery positive and negative electrode plates, and enhance battery performance.

In the related art, the battery aluminum foil is treated by double-sided coating. A carbon coating slurry and an electrode slurry are mixed, and then the front and back sides of the aluminum foil are coated respectively.

Although the double-sided coating may save resources and reduce operating costs, it needs two coating plants and takes up a large space. In addition, the double-sided coating needs the same solvent system for carbon coating slurry and electrode slurry, and high demand for materials. The use conditions for the double-sided coating may be limited.

### SUMMARY

In a first aspect, the embodiments of the present disclosure provide a battery aluminum foil coating device. The battery aluminum foil coating device include:
an unwinding mechanism configured to unwind an aluminum foil;
a double-sided coating assembly configured to coat a first carbon coating slurry on a first surface of the aluminum foil, to coat a second carbon coating slurry on a second surface of the aluminum foil, and to dry the first surface and the second surface;
a first-sided coating assembly configured to sequentially coat a first electrode slurry and a first ceramic insulating slurry on the first surface, and to dry the first surface;
a second-sided coating assembly configured to sequentially coat a second electrode slurry and a second ceramic insulating slurry on the second surface, and to dry the second surface; and
a winding mechanism configured to wind the aluminum foil.

In a second aspect, the embodiments of the present disclosure provide a battery aluminum foil coating method, the battery aluminum foil coating method includes at least following steps:
unwinding an aluminum foil by an unwinding mechanism;
coating a first carbon coating slurry and a second carbon coating slurry on a first surface and a second surface of the aluminum foil, respectively, and simultaneously drying the first surface coated with the first carbon coating slurry and the second surface coated with the second carbon coating slurry by a double-sided coating assembly to form a first carbon coating layer and a second carbon coating layer, respectively;
sequentially coating a first electrode slurry and a first ceramic insulating slurry on the first carbon coating layer, and drying the first surface coated with the first electrode slurry and the first ceramic insulating slurry by a first-sided coating assembly;
sequentially coating a second electrode slurry and a second ceramic insulating slurry on the second carbon coating layer, and drying the second surface coated with the second electrode slurry and the second ceramic insulating slurry by a second-sided coating assembly; and
winding the aluminum foil by a winding mechanism.

In a third aspect, the embodiments of the present disclosure provide a current collector including an aluminum foil. The aluminum foil is manufactured by the above battery aluminum foil coating method.

In a fourth aspect, the embodiments of the present disclosure provide a battery including a positive electrode plate and a positive electrode plate. The positive electrode plate includes a positive electrode current collector and a positive electrode active material. The negative electrode plate includes a negative electrode current collector. At least one of the positive electrode current collector and the negative electrode current collector is the above current collector.

The embodiments of the present disclosure provide the battery aluminum foil coating device, the battery aluminum foil coating method, the current collector and the battery. By sequentially passing the aluminum foil through the unwinding mechanism, the double-sided coating assembly, the first-sided coating assembly, the second-sided coating assembly and the winding mechanism to complete double-sided coating, the aluminum foil carbon layer coating process and the electrode slurry coating process may be combined, production cost may be reduced, production cycle may be shortened, and resource waste may be reduced. Moreover, compared with the traditional method that needs two devices to coat the first surface and the second surface of the aluminum foil respectively, the present disclosure integrates the coating function by the double-sided coating assembly, and saves the occupied space of the coating device. In addition, the double-sided coating assembly may respectively coat carbon-coated layers on both sides of the aluminum foil, and the first-sided coating assembly and the second-sided coating assembly may respectively coat electrode layers on the carbon-coated layers, so that the step-by-step coating technology allows the different solvent systems applied on carbon coating slurry and electrode slurry, which reduces strict demands on material compatibility.

### BRIEF DESCRIPTION OF THE DRAWINGS

FIG. 1 is a schematic structural view of a battery aluminum foil carbon layer coating device in the related art.
FIG. 2 is a schematic structural view of a battery aluminum foil electrode slurry coating device in the related art.
FIG. 3 is a schematic structural view of a battery aluminum foil carbon layer double-sided coating device in the related art.
FIG. 4 is a schematic structural view of a battery aluminum foil coating device provided by some embodiments of the present disclosure.
FIG. 5 is a flowchart of a battery aluminum foil coating method provided by some embodiments of the present disclosure.
FIG. 6 is a top view of a first surface of the battery aluminum foil provided by some embodiments of the present disclosure after a double-sided coating process is completed.
FIG. 7 is a schematic structural view of a coating main layer provided by some embodiments of the present disclosure.
FIG. 8 is a schematic structural view of a current collector provided by some embodiments of the present disclosure.
FIG. 9 is a schematic structural view of a battery provided by some embodiments of the present disclosure.

Reference numerals:
1, battery aluminum foil carbon layer coating device; 11, first aluminum foil unwinding mechanism; 12, aluminum foil corona mechanism; 13, aluminum foil first-sided carbon layer coating mechanism; 14, first aluminum foil oven; 15, aluminum foil second-sided carbon layer coating mechanism; 16, second aluminum foil oven; 17, first aluminum foil winding mechanism;
2, battery aluminum foil electrode slurry coating device; 21, second aluminum foil unwinding mechanism; 22, aluminum foil first-sided electrode slurry coating mechanism; 23, third aluminum foil oven; 24, aluminum foil second-sided electrode slurry coating mechanism; 25, fourth aluminum foil oven; 26, second aluminum foil winding mechanism;
3, double-sided coating device; 31, unwinding mechanism; 32, a first-sided coating assembly; 33, a second-sided coating assembly; 34, winding mechanism;
4, battery aluminum foil coating device; 41, unwinding mechanism; 42, double-sided coating assembly; 43, a first-sided coating assembly; 44, a second-sided coating assembly; 45, winding mechanism; 46, corona mechanism; 47, deviation correction mechanism;
421, double-sided carbon layer coating mechanism; 4211, first carbon layer coating mechanism; 4212, second carbon layer coating mechanism; 4213, housing; 422, drying mechanism; 431, first-sided coating mechanism; 432, first oven; 441, second-sided coating mechanism; 442, second oven; 471, first deviation correction structure; 473, third deviation correction structure;
5, current collector; 51, coating layer; 511, coating main layer; 512, ceramic insulating layer; 5111, carbon coating layer; 5112, electrode layer; 52, foil exposed part; 53, metal layer;
6, battery; 61, positive electrode plate; 62, negative electrode plate; 63, separator.

### DETAILED DESCRIPTION

In the description of the present disclosure, it should be understood that, unless specified or limited otherwise, the terms "connected", "coupled" and "fixed" are used broadly, and may be, for example, fixed connections, detachable connections, or integrated connections; may also be mechanical or electrical connections; may also be direct connections or indirect connections via intervening structures; may also be inner communications of two elements or interaction relationships between two elements, which can be understood in the present disclosure by those skilled in the art according to specific situations.

In the present disclosure, unless specified or limited otherwise, a structure in which a first feature is "on" or "below" a second feature may include an embodiment in which the first feature is in direct contact with the second feature, and may also include an embodiment in which the first feature and the second feature are not in direct contact with each other, but are contacted via an additional feature formed therebetween. Furthermore, a first feature "on", "above", or "on top of" a second feature may include an embodiment in which the first feature is right or obliquely "on", "above", or "on top of" the second feature, or just means that the first feature is at a height higher than that of the second feature. A first feature "below", "under", or "on bottom of' a second feature may include an embodiment in which the first feature is right or obliquely "below", "under", or "on bottom of' the second feature, or just means that the first feature is at a height lower than that of the second feature.

In the description of the embodiments, orientational or positional relationships represented by directional terms mentioned in the present disclosure, such as "upper", "lower", "left", "right", "front", "rear", etc., are orientational or positional relationships based on the drawings, and are merely for the convenience of describing the present disclosure and simplifying the description, rather than indicating or implying that the device or element is intended to have a particular orientation, or is constructed and operated in a particular orientation, and therefore, should not be interpreted as a limitation of this application. In addition, the terms "first" and "second" are used to distinguish in description and have no special meaning.

The embodiments of the present disclosure provide a battery aluminum foil coating device, a battery aluminum foil coating method, a current collector, and a battery. Hereinafter, each of them will be described in detail. It should be noted that the order of description of the following embodiments is not intended to limit the preferred order of the embodiments.

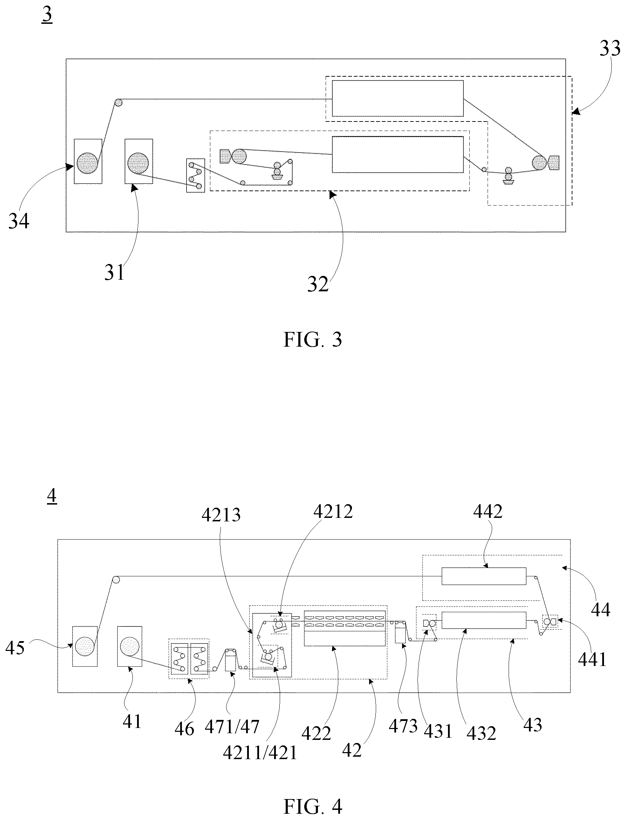

Referring to FIG. 4, FIG. 4 is a schematic structural view of the battery aluminum foil coating device provided by some embodiments of the present disclosure.

In some embodiments, the battery aluminum foil coating device 4 includes an unwinding mechanism 41, a double-sided coating assembly 42, a first-sided coating assembly 43, a second-sided coating assembly 44, and a winding mechanism 45. The unwinding mechanism 41 is configured to unwind the aluminum foil. The double-sided coating assembly 42 is configured to first apply a carbon coating slurry on a first surface of the aluminum foil, then apply a carbon coating slurry on a second surface of the aluminum foil, and finally dry both the first and second surfaces of the coated aluminum foil simultaneously. The first-sided coating assembly 43 is configured to sequentially apply an electrode slurry and a ceramic insulation slurry on the first surface of the aluminum foil, and dry the coated first surface of the aluminum foil. The second-sided coating assembly 44 is configured to sequentially apply an electrode slurry and a ceramic insulation slurry on the second surface of the aluminum foil, and dry the coated second surface of the aluminum foil. The winding mechanism 45 is configured to wind the coated aluminum foil. The double-sided coating for the aluminum foil is completed by sequentially passing through the unwinding mechanism 41, the double-sided coating assembly 42, the first-sided coating assembly 43, the second-sided coating assembly 44, and the winding mechanism 45.

It can be understood that in the embodiments, the battery aluminum foil coating device 4 includes the unwinding mechanism 41, the double-sided coating assembly 42, the first-sided coating assembly 43, the second-sided coating assembly 44, and the winding mechanism 45, so that the interference between different coating processes may be avoided, and the overall performance and production efficiency of the device may be improved. The double-sided coating assembly 42, the first-sided coating assembly 43, and the second-sided coating assembly 44 independently perform specific coating and drying processes. The parameters of each part may be adjusted according to different needs to adapt to different production conditions and materials.

In some embodiments, the double-sided coating assembly 42 is located between the unwinding mechanism 41 and the first-sided coating assembly 43. The double-sided coating assembly 42 includes a double-sided carbon layer coating mechanism 421 and a drying mechanism 422 connected in sequence. The first-sided coating assembly 43 is located between the double-sided coating assembly 42 and the second-sided coating assembly 44. The first-sided coating assembly 43 includes a first-sided coating mechanism 431 and a first oven 432 connected in sequence. The second-sided coating assembly 44 is located between the first-sided coating assembly 43 and the winding mechanism 45. The second-sided coating assembly 44 includes a second-sided coating mechanism 441 and a second oven 442 connected in sequence. The aluminum foil passes through the unwinding mechanism, the double-sided carbon layer coating mechanism 421, the drying mechanism 422, the first-sided coating mechanism 431, the first oven 432, the second-sided coating mechanism 441, the second oven 442, and the winding mechanism 45 to complete the double-sided coating.

Further, the double-sided carbon layer coating mechanism 421 is configured to first apply the carbon coating slurry on the first surface of the aluminum foil and then apply the carbon coating slurry on the second surface of the aluminum foil. The double-sided carbon layer coating mechanism 421 may be located at any position among the front end, the rear end, the upper end, or the lower end of the unwinding mechanism 41 as long as the aluminum foil could be sequentially fed into the unwinding mechanism 41, the double-sided carbon layer coating mechanism 421, and the drying mechanism 422.

Specifically, the double-sided carbon layer coating mechanism 421 includes a first carbon layer coating mechanism 4211 and a second carbon layer coating mechanism 4212 which are sequentially connected. The first carbon layer coating mechanism 4211 is configured to coat the carbon coating slurry on the first surface of the aluminum foil. The second carbon layer coating mechanism 4212 is configured to coat the carbon coating slurry on the second surface of the aluminum foil. So that the carbon coating slurry may be uniformly coated on both sides of the aluminum foil by the double-sided carbon layer coating mechanism 421, and the production cycle may be shortened. The first carbon layer coating mechanism 4211 and the second carbon layer coating mechanism 4212 is provided to process both surfaces (the first surface and the second surface) of the aluminum foil, respectively, so that the coating process parameters (such as coating speed, coating thickness, pressure, etc.) for each surface may be independently adjusted, and the uniformity and accuracy of coating may be ensured.

In some embodiments, the double-sided carbon layer coating mechanism 421 further includes a housing 4213. The first carbon layer coating mechanism 4211 and the second carbon layer coating mechanism 4212 are both located in the housing 4213. The second carbon layer coating mechanism 4212 may be located at any position among the front end, the rear end, the upper end, or the lower end of the first carbon layer coating mechanism 4211, as long as the aluminum foil could be sequentially fed into the first carbon layer coating mechanism 4211 and the second carbon layer coating mechanism 4212. The embodiments take the example of the first carbon layer coating mechanism 4211 and the second carbon layer coating mechanism 4212 being vertically arranged inside the housing 4213 to illustrate the technical solution of the present disclosure.

It can be understood that the embodiments may reduce the occupied area and the complexity of the arrangement of the device, and may optimize space utilization by both locating the first carbon layer coating mechanism 4211 and the second carbon layer coating mechanism 4212 in the housing 4213.

The drying mechanism 422 is located between the double-sided carbon layer coating mechanism 421 and the first-sided coating assembly 43. The drying mechanism 422 is configured to simultaneously dry the first surface and the second surface of the coated aluminum foil. A heat source of the drying mechanism 422 may be at least one of steam, an electric heater, infrared, and microwave. A suitable drying method may be selected according to actual needs to ensure that the coated aluminum foil could be efficiently dried.

It should be noted that the embodiments take the drying mechanism 422 as an infrared oven as an example to illustrate the technical solution of the present disclosure. The infrared oven adopts infrared radiation for heating. The infrared radiation may penetrate the air layer and directly heat the surface of the material, which may quickly increase the temperature and speed up the drying speed. The drying mechanism 422 may include an oven and a plurality of infrared heating elements located in the oven. The plurality of the infrared heating elements are respectively mounted at the top and bottom of the oven. The aluminum foil may move inside the oven by a conveyor belt. The design of the conveyor belt may ensure that the aluminum foil moves smoothly under the infrared heating elements to ensure that both the first surface and the second surface of the aluminum foil could receive infrared radiation at the same time. By adjusting the radiation intensity of the infrared heating elements at the top and the bottom, the uniformity of heating for the first surface and the second surface of the aluminum foil could be controlled.

In some embodiments, the first-sided coating assembly 43 includes a first-sided coating mechanism 431 and a first oven 432 connected in sequence. The first-sided coating mechanism 431 is configured to sequentially coat the electrode slurry and the ceramic insulating slurry on the first surface of the aluminum foil. The first oven 432 is configured to dry the first surface of the coated aluminum foil.

It should be noted that, since the first-sided coating mechanism 431 sequentially applies the electrode slurry and the ceramic insulating slurry on the carbon coating layer after the carbon coating layer is dried, there is no direct contact between the carbon coating slurry and the electrode slurry, and chemical reaction and incompatibility problems between them may be avoided.

Specifically, the first-sided coating mechanism 431 may be located at any position among the front end, the rear end, the upper end, or the lower end of the drying mechanism 422 as long as the aluminum foil could be sequentially fed into the first-sided coating mechanism 431 and the first oven 432. Specifically, the embodiments take the first coating mechanism 431 being located between the drying mechanism 422 and the first oven 432 as an example to illustrate the technical solution of the present disclosure.

The first-sided coating mechanism 431 includes a first die. The first die may be divided into two regions, one region is used for the whole surface coating of the electrode slurry, and the other region is used for the edge coating of the ceramic insulating slurry. The two regions may be separated by a fluid isolation structure, ensuring that the two materials do not mix within the first die.

It can be understood that in the embodiments of the present disclosure, the first-sided coating assembly 43 includes the first-sided coating mechanism 431 and the first oven 432 connected in sequence, so that the first-sided coating mechanism 431 and the first oven 432 may be integrated into one production line. The space may be saved and the occupied area of the device may be reduced. After the first surface and the second surface of the aluminum foil are dried by the drying mechanism 422, the first surface of the aluminum foil may be immediately subjected to electrode slurry coating by the first-sided coating mechanism 431 and then ceramic insulating slurry coating. Afterwards, the aluminum foil enters the first oven 432 for drying. The transfer time and operation complexity between various steps for the aluminum foil may be reduced, and the whole production process may be simplified. In addition, the aluminum foil coated with the carbon layer may be avoided to be exposed to the air for a long time, and may be avoided to cause oxidation phenomenon and affect the adhesion of the subsequent coating layer.

It should be noted that the carbon coating slurry forms a uniform coating layer on the surface of the aluminum foil, so that the micro unevenness on the surface of the aluminum foil are filled flat, thus providing a smoother and flatter substrate. That is, after the carbon coating slurry is applied, the electrode slurry is applied, and the uniformity and adhesion of each coating layer may be ensured. Moreover, the carbon coating slurry provides a good conductivity basis, and the coating of electrode slurry may further improve the performance of the battery.

In some embodiments, the second-sided coating assembly 44 includes a second-sided coating mechanism 441 and a second oven 442 connected in sequence. The second-sided coating mechanism 441 is configured to sequentially coat the electrode slurry and the ceramic insulating slurry on the second surface of the aluminum foil. The second oven 442 is configured to dry the second surface of the coated aluminum foil.

Specifically, the second-sided coating mechanism 441 may be located at any position among the front end, the rear end, the upper end, or the lower end of the first oven 432 as long as the aluminum foil could be sequentially fed into the second-sided coating mechanism 441 and the second oven 442. Specifically, the embodiments take the second-sided coating mechanism 441 being located between the first oven 432 and the second oven 442 as an example to illustrate the technical solution of the present disclosure.

The second-sided coating mechanism 441 includes a second die. The second die may be divided into two regions, one region is used for the whole surface coating of the electrode slurry, and the other region is used for the edge coating of the ceramic insulating slurry. The two regions may be separated by a fluid isolation structure, ensuring that the two materials do not mix within the second die.

It can be understood that the embodiment integrates the second-sided coating assembly 44 includes the second-sided coating mechanism 441 and the second oven 442 connected in sequence, so that the second-sided coating mechanism 441 and the second oven 442 may be integrated into one production line. The space may be saved and the occupied area of the device may be reduced. By coating the electrode slurry on the second surface of the aluminum foil by the second-sided coating mechanism 441, and drying the second surface of the coated aluminum foil by the second oven 442, it may be ensured that the coating on both sides (the first surface and the second surface) of the aluminum foil is treated under the same conditions. Further, it may be ensured that the thickness and quality of the coating on both sides are consistent. In addition, after the first surface of the aluminum foil is subjected to the drying treatment by the first oven 432, the second surface of the aluminum foil may be immediately subjected to electrode slurry coating by the second-sided coating mechanism 441, and then the second oven 442 may be subjected to drying.

It should be noted that Carbon-coated aluminum foil or copper foil is to uniformly and finely coat dispersed nano-conductive graphite and carbon-coated particles on the aluminum foil or on the copper foil. Nano-conductive graphite and carbon-coated particles may provide excellent static conductivity, collect micro-currents of active materials, improve the processing performance of battery positive and negative electrode plates and enhance battery performance. At present, lithium battery companies directly purchase carbon-coated aluminum foil for coating, and the cost is high. Some companies purchase low-priced double-sided bare aluminum foil in order to reduce the cost of incoming materials, and then the carbon coating slurry process and electrode slurry coating process are sequentially applied to the surface of the double-sided bare aluminum foil to prepare the electrode plate to be cut.

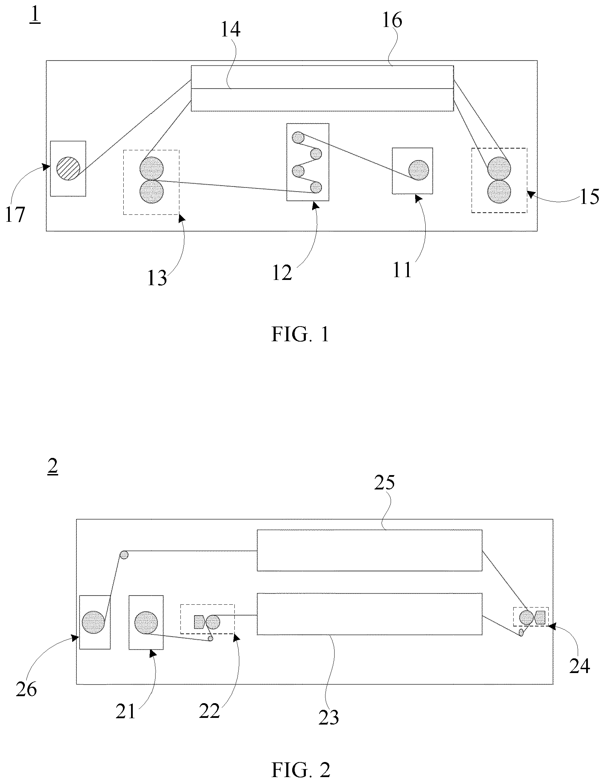

Specifically, FIG. 1 is a schematic structural view of a battery aluminum foil carbon layer coating device in the related art. In the related art, the battery aluminum foil carbon layer coating device 1 includes a first aluminum foil unwinding mechanism 11, an aluminum foil corona mechanism 12, an aluminum foil first-sided carbon layer coating mechanism 13, a first aluminum foil oven 14, an aluminum foil second-sided carbon layer coating mechanism 15, a second aluminum foil oven 16, and a first aluminum foil winding mechanism 17. The aluminum foil is sequentially fed into the first aluminum foil unwinding mechanism 11, the aluminum foil corona mechanism 12, the aluminum foil first-sided carbon layer coating mechanism 13, the first aluminum foil oven 14, the aluminum foil second-sided carbon layer coating mechanism 15, the second aluminum foil oven 16, and the aluminum foil winding mechanism 17.

Referring to FIG. 2, which is a schematic structural view of a battery aluminum foil electrode slurry coating device in the related art. In the related art, the battery aluminum foil electrode slurry coating device 2 includes a second aluminum foil unwinding mechanism 21, an aluminum foil first-sided electrode slurry coating mechanism 22, a third aluminum foil oven 23, an aluminum foil second-sided electrode slurry coating mechanism 24, a fourth aluminum foil oven 25, and a second aluminum foil winding mechanism 26. The aluminum foil having completed the double-sided carbon layer coating process is sequentially fed into the second aluminum foil unwinding mechanism 21, the aluminum foil first-sided electrode slurry coating mechanism 22, the third aluminum foil oven 23, the aluminum foil second-sided electrode slurry coating mechanism 24, the fourth aluminum foil oven 25, and the second aluminum foil winding mechanism 26, thereby completing the aluminum foil double-sided electrode slurry coating process.

Referring to FIG. 1 and FIG. 2, it can be seen that in the related art, the aluminum foil carbon layer coating and the electrode slurry coating are two discontinuous processes. The aluminum foil carbon coating process and the electrode slurry coating process need to go through two winding and unwinding processes, and the operation is cumbersome. In order to reduce the cost of incoming materials, some companies purchase low-priced double-sided bare aluminum foil. It is needed to add a factory building to perform a carbon coating process on the surface of the aluminum foil. In addition, it is needed to dry the carbon-coated aluminum foil by an oven. After carbon coating and drying, the aluminum foil is sent to the electrode coating workshop to perform an electrode slurry coating process. The product realization cycle is long and the labor cost is high.

It can be understood that, compared with the disadvantage of higher cost caused by directly purchasing carbon-coated aluminum foil for electrode slurry coating, the embodiments of the present disclosure integrate the unwinding mechanism 41, the double-sided carbon layer coating mechanism 421, the drying mechanism 422, the first-sided coating mechanism 431, the first oven 432, the second-sided coating mechanism 441, the second oven 442, and the winding mechanism 45 on one production line, which saves space and reduces the occupied area of the device. In addition, the waste of device and human resources is reduced, and the production cost is reduced by a continuous and efficient production process.

In addition, compared with the aluminum foil coating process with two coating and two winding in the related art, in the battery aluminum foil coating device 4 provided in the embodiments of the present disclosure, the aluminum foil may be coated on both sides only by one unwinding and one winding. The cumbersome operation is effectively reduced. Manual handling for the aluminum foil material is avoided, and manpower is saved.

It should be noted that the unwinding mechanism 41, the double-sided carbon layer coating mechanism 421, the drying mechanism 422, the first-sided coating mechanism 431, the first oven 432, the second-sided coating mechanism 441, the second oven 442, and the winding mechanism 45 may be connected by a conveyor belt. The connection mode between the mechanisms and/or assemblies is not specifically limited in the embodiments.

Referring to FIG. 3, which is a schematic structural view of a battery aluminum foil carbon layer double-sided coating device in the related art. In the related art, the double-sided coating device 3 includes an unwinding mechanism 31, a first-sided coating assembly 32, a second-sided coating assembly 33, and a winding mechanism 34. The unwinding mechanism 31 is used for unwinding the aluminum foil. The first-sided coating assembly 32 is used for sequentially coating carbon coating slurry and electrode slurry on the first surface of the aluminum foil and drying the first surface of the coated aluminum foil. The second-sided coating assembly 33 is used for sequentially coating the carbon coating slurry and electrode slurry on the second surface of the aluminum foil and drying the second surface of the coated aluminum foil. The winding mechanism 34 is used for winding the coated aluminum foil. The aluminum foil passes through the unwinding mechanism 31, the first-sided coating assembly 32, the second-sided coating assembly 33, and the winding mechanism 34 in sequence. That is, by combining the aluminum foil carbon layer coating process and the electrode slurry coating process, the production cost is reduced, the production cycle is shortened, and the waste of resources is reduced.

In the double-sided coating device 3 in FIG. 3, the double-sided coating is completed by mixing the carbon coating slurry and the electrode slurry, then sequentially coating the carbon coating slurry and the electrode slurry on the first surface of the aluminum foil, drying the first surface of the coated aluminum foil, sequentially coating the carbon coating slurry and the electrode slurry on the second surface of the aluminum foil, and drying the second surface of the coated aluminum foil. In order to realize the simultaneous drying of the carbon coating slurry and the electrode slurry, it is necessary that the solvent system of the carbon coating slurry is the same as the solvent system of the electrode slurry. Therefore, the usage conditions of the double-sided coating device 3 is restricted.

It can be understood that the battery aluminum foil coating device 4 provided in the embodiments of the present disclosure includes a double-sided coating assembly 42, a first-sided coating assembly 43, and a second-sided coating assembly 44, so that the carbon coating slurry may be coated on both surfaces of the aluminum foil by the double-sided coating assembly 42, respectively. The first surface and the second surface of the coated aluminum foil may be dried simultaneously. Carbon coating layers on both surfaces of the aluminum foil are formed. The electrode slurry is coated on the carbon coating layer on the first surface of the aluminum foil by the first-sided coating assembly 43, and the first surface of the coated aluminum foil is dried. The electrode slurry is coated on the carbon coating layer on the second surface of the aluminum foil by the second-sided coating assembly 44, and the second surface of the coated aluminum foil is dried. Since the electrode slurry is coated on the dried carbon coating layer in the embodiments, even if the solvent system of the carbon coating slurry is different from the solvent system of the electrode slurry, there will be no direct contact between the two slurries. The chemical reaction and incompatibility problems between the two slurries may be avoided. That is, a step-by-step coating technique in the embodiments allows different solvent systems to be used on the carbon coating slurry and the electrode slurry. The demands for material compatibility may be reduced.

It should be noted that since the electrode slurry is applied to the dried carbon coating layer, the carbon coating slurry has no influence on the coating for the electrode slurry. In the embodiments of the present disclosure, the solvent system of the carbon coating slurry and the solvent system of the electrode slurry may be different from each other, or the solvent system of the carbon coating slurry and the solvent system of the electrode slurry may be the same. That is, the solvent system of the carbon coating layer and the solvent system of the electrode slurry are not particularly limited in the embodiments.

Further, in the embodiments of the present disclosure, the battery aluminum foil coating device 4 further includes a corona mechanism 46 and a plurality of deviation correction mechanisms 47. The corona mechanism 46 is configured to remove oil stains on the surface of the aluminum foil before the aluminum foil is coated. One of the deviation correction mechanisms 47 may be provided between the drying mechanism 422 and the first-sided coating mechanism 431. One of the deviation correction mechanisms 47 may be provided between the first oven 432 and the second-sided coating mechanism 441. One of the deviation correction mechanisms 47 may be provided between the second oven 442 and the winding mechanism 45. The deviation correction mechanism 47 is configured to adjust the deviation of aluminum foil conveyor belt and coating misalignment.

Specifically, the deviation correction mechanisms 47 include a first deviation correction structure 471, a second deviation correction structure (not shown in the figure), a third deviation correction structure 473, and a fourth deviation correction structure (not shown in the figure). The first deviation correction structure 471 is located between the corona mechanism 46 and the double-sided coating assembly 42. The first deviation correction structure 471 is used for detecting whether the aluminum foil is misaligned when transported on the conveyor belt between the corona mechanism 46 and the double-sided coating assembly 42, and adjusting the deviation of the conveyor belt. The second deviation correction structure is located between the drying mechanism 422 and the first-sided coating mechanism 431. The second deviation correction structure is used for detecting whether the aluminum foil is misaligned when transported on the conveyor belt between the drying mechanism 422 and the first-sided coating mechanism 431, and adjusting the deviation of the conveyor belt. The third deviation correction structure 473 is located between the first oven 432 and the second-sided coating mechanism 441. The third deviation correction structure 473 is used for detecting whether the aluminum foil is misaligned when transported on the conveyor belt between the first oven 432 and the second-sided coating mechanism 441, and adjusting the deviation of the conveyor belt. The fourth deviation correction structure is located between the second oven 442 and the winding mechanism 45. The fourth deviation correction structure is used for detecting whether the aluminum foil is misaligned when transported on the conveyor belt between the second oven 442 and the winding mechanism 45, and adjusting the deviation of the conveyor belt.

It can be understood that by providing the first deviation correction structure 471, the second deviation correction structure, the third deviation correction structure 473, and the fourth deviation correction structure in the embodiments of the present disclosure, the deviation for the aluminum foil conveyor belt and the coating misalignment may be monitored and adjusted. The coating accuracy on the aluminum foil may be improved and the stroke of the aluminum foil may be stabilized.

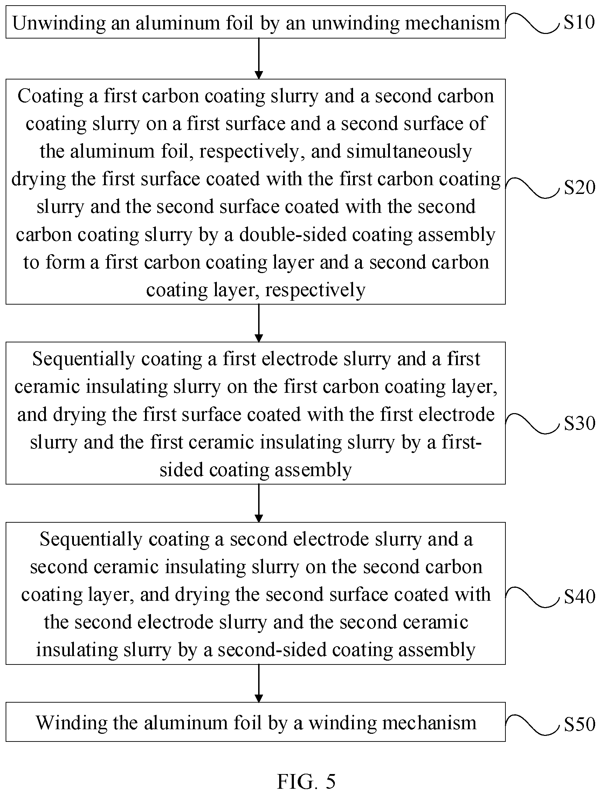

Referring to FIG. 4 and and FIG. 5, FIG. 5 is a flowchart of a battery aluminum foil coating method provided by some embodiments of the present disclosure.

The embodiments of the embodiments of the present disclosure further provides a battery aluminum foil coating method. The coating method includes the following steps S10 to S50. It should be noted that in some embodiments of the battery aluminum foil coating method, the above battery aluminum foil coating device is used to coat slurries on an aluminum foil to form a battery pole plate to be cut.

At step S10, after an aluminum foil roll is unwound by the unwinding mechanism 41, the aluminum foil is fed into the double-sided coating assembly 42.

Specifically, step S10 includes the following steps S11 and S12.

At step S11, after the aluminum foil roll is unwound by the unwinding mechanism 41, the aluminum foil may be fed into the corona mechanism 46 by the guide roller. The corona mechanism 46 is used to remove oil stains on the surface of the aluminum foil, change the surface energy of the aluminum foil, and make it easier to adhere to the primer slurry in the subsequent process.

At step S12, after the aluminum foil passes through the corona mechanism 46, the aluminum foil may be sequentially fed into the first deviation correction structure 471 and the double-sided coating assembly 42 by the guide roller. The first deviation correction structure 471 is configured to detect whether the aluminum foil is misaligned when transported on the conveyor belt between the corona mechanism 46 and the double-sided coating assembly 42, and to adjust the deviation of the conveyor belt.

At step S20, the aluminum foil enters the double-sided coating assembly 42, and the carbon coating slurry is first coated on the first surface of the aluminum foil by the double-sided coating assembly 42, and then the carbon coating slurry is coated on the second surface of the aluminum foil, and then the first surface and the second surface of the coated aluminum foil are simultaneously dried, and finally the aluminum foil on which the carbon coating layer is finished is sent to the first-sided coating assembly 43.

Specifically, step S20 includes the following steps S21 and S23.

At step S21, the aluminum foil enters the first carbon layer coating mechanism 4211, a carbon coating slurry is coated on the first surface of the aluminum foil by the first carbon layer coating mechanism 4211, and then the aluminum foil is fed to the second carbon layer coating mechanism 4212.

Specifically, the coating method for the carbon coating slurry includes, but is not limited to, gravure transfer coating. The first carbon layer coating mechanism 4211 includes a first-sided gravure coating roller that performs carbon coating slurry coating on the first surface by driving the aluminum foil to move.

At step S22, the aluminum foil enters the second carbon layer coating mechanism 4212, and a carbon coating slurry is coated on the second surface of the aluminum foil by the second carbon layer coating mechanism 4212, and then the aluminum foil is fed into the drying mechanism 422.

The carbon coating slurry may be an aqueous system. The carbon coating slurry includes but is not limited to a main powder, a special glue solution and a solvent. The main powder may be one of carbon black (SP) or graphene (GR). The special glue solution may include a polymer binder, such as polyacrylic acid (PAA), polyvinyl alcohol (PVA), polytetrafluoroethylene (PTFE), polyolefins (such as polypropylene (PP), polyethylene (PE) or other copolymers), polyvinylidene fluoride (PVDF), and modified styrene butadiene rubber (SBR). The special glue solution may form a strong coating layer after drying. The solvent may be deionized water.

Specifically, the coating method for the carbon coating slurry includes, but is not limited to, gravure transfer coating. The second carbon layer coating mechanism 4212 includes a second-sided gravure coating roller that performs carbon coating slurry coating on the second surface by driving the aluminum foil to move.

It should be noted that after the carbon coating slurry is coated on the second surface of the aluminum foil, the thickness and defect detection of the carbon coating layers on the first surface and the second surface of the aluminum foil may be completed by a foil detection device. It could be ensured that a width of the aluminum foil is within the preset specification range and does not exceed the tolerance range. Any defects on the surfaces of the aluminum foil, such as bubbles, cracks, uncoated regions, uneven coating, etc., may be identified. After the defect is identified, the defective aluminum foil may be rejected or reworked in the subsequent production process. The embodiments do not specifically limit the type of the foil detection device. The embodiments take the foil detection device as a macro charge coupled device (CCD) camera as an example to illustrate the technical solution of the present disclosure.

At step S23, the aluminum foil enters the drying mechanism 422, the first surface and the second surface of the coated aluminum foil are simultaneously dried by the drying mechanism 422, and then the aluminum foil on which the carbon layer has been coated is fed into the first surface coating assembly 43.

It should be noted that before the aluminum foil enters the drying mechanism 422, since the carbon coating slurries on the first surface and on the second surface of the aluminum foil are not dried, the aluminum foil maybe introduced into the drying mechanism 422 by a smoothing roller. It could be ensured that the surface coating of the coated aluminum foil is uniform and free of wrinkles or other defects by controlling the tension of the aluminum foil during the drying process.

Specifically, the heat source of the drying mechanism 422 may be at least one of steam, an electric heater, infrared, and microwave. A suitable drying method may be selected according to actual needs to ensure that the coated aluminum foil could be efficiently dried. The embodiments take the drying mechanism 422 as an infrared oven as an example to illustrate the technical solution of the present disclosure.

The drying mechanism 422 may include an oven and a plurality of infrared heating elements located in the oven. The plurality of the infrared heating elements are respectively installed at the top and bottom of the oven. The aluminum foil may move inside the oven by a conveyor belt. The design of the conveyor belt may ensure that the aluminum foil moves smoothly under the infrared heating elements to ensure that both the first surface and the second surface of the aluminum foil could receive infrared radiation at the same time. By adjusting the radiation intensity of the infrared heating elements at the top and the bottom, the uniformity of heating for the first surface and the second surface of the aluminum foil could be controlled.

A drying temperature of the drying mechanism 422 ranges from 70 degrees Celsius to 170 degrees Celsius. A drying time of the drying mechanism 422 ranges from 3 seconds to 9 seconds. The drying time for the aluminum foil is related to the speed of the conveyor belt. The faster the speed of the conveyor belt, the shorter the drying time. The speed range of the conveyor belt ranges from 20 meters/minute to 70 meters/minute. The length of the drying mechanism is roughly 3 meters.

Further, after the aluminum foil is dried by the drying mechanism 422, the aluminum foil may be detected by a surface density meter. The surface density meter is an instrument for measuring the quality of the surface coating of a material. The surface density meter may use X-ray or β-ray as a detection means. The surface density of the carbon coating layer on the surface of the aluminum foil may be detected by the surface density meter, that is, the quality of the carbon coating layer per unit area. It may be ensured that the coating is uniform and conforms to predetermined specifications and standards.

It can be understood that the double-sided coating assembly 42 may respectively coat the carbon coating slurry on both surfaces of the aluminum foil in the embodiments, and simultaneously dry the first surface and the second surface of the coated aluminum foil, so that the moisture or other solvent in the carbon coating slurry may be volatilized. The carbon coating slurry is dried and bonded to the surface of the aluminum foil. Carbon coating layers are formed respectively on the first surface and the second surface of the aluminum foil.

Further, at step S20, after the detection for the aluminum foil is completed by the surface density meter, the aluminum foil may be sequentially fed to the second deviation correction structure and the first-sided coating assembly 43 by the conveyor belt. The second deviation correction structure is configured to detect whether the aluminum foil is misaligned when transported on the conveyor belt between the drying mechanism 422 and the first-sided coating assembly 43.

At step S30, the aluminum foil enters the first-sided coating assembly 43, an electrode slurry and a ceramic insulating slurry are sequentially coated on the first surface of the aluminum foil by the first-sided coating assembly 43 after the coating of the carbon layer is completed. The first surface of the aluminum foil is dried after the coating of the electrode slurry is completed, and then the aluminum foil is fed into the second-sided coating assembly 44.

Specifically, step S30 includes the following steps S31 and S32.

At step S31, the aluminum foil enters the first-sided coating mechanism 431, and the electrode slurry and the ceramic insulating slurry are sequentially coated on the first surface by the first-sided coating mechanism 431 of the aluminum foil after the coating of the carbon layer is completed, and then the aluminum foil is fed into the first oven 432.

The electrode slurry may be an oily system. The electrode slurry includes an active material, a binder, a dispersant, a conductive agent and an organic solvent. The active material may be lithium iron phosphate. The binder may be polyvinylidene fluoride. The dispersant may be a positive electrode material dispersant such as YTF003. The conductive agent may be carbon nanotubes. The organic solvent may be n-methylpyrrolidone (NMP). The solvent system of the ceramic insulating slurry is the same as the solvent system of the electrode slurry. Since both of them belong to the same solvent system, the ceramic insulating slurry and the electrode slurry may be mutually soluble at the junction thereof, and facilitate the subsequent drying process to be dried together. It should be noted that the material of the ceramic insulating slurry is not particularly limited in the embodiments.

Further, the viscosity of the electrode slurry ranges from 5,000 mPa s to 25,000 mPa s. The viscosity of the ceramic insulating slurry ranges from 1,000 mPa s to 7,000 mPa s. The solid content of the electrode slurry ranges from 60% to 70%. The solid content of the ceramic insulating slurry ranges from 30% to 38%.

Specifically, the first-sided coating mechanism 431 may include a first die. The first die may be divided into two regions, one region is used for the whole surface coating of the electrode slurry, and the other region is used for the edge coating of the ceramic insulating slurry. The two regions may be separated by a fluid isolation structure, ensuring that the two materials do not mix within the first die.

It should be noted that, in the embodiments, after the coating of the electrode slurry and the ceramic insulating slurry on the first surface of the aluminum foil is completed by the first-sided coating mechanism 431, the wet film surface density detection may be performed for the first surface of the coated aluminum foil by the surface density meter, so that problems that may occur in the coating process, such as uneven coating, thickness deviation, etc., may be found in time. Each batch of products may be ensured to meet the standards. Furthermore, according to the measurement results, parameters of the coating device, such as coating speed, slurry supply amount, coating pressure, etc., may be adjusted in real time to optimize the coating effect.

At step S32, the aluminum foil enters the first oven 432, the first surface of the coated aluminum foil is dried by the first oven 432, and then the aluminum foil is fed into the second-sided coating assembly 44.

A drying temperature of the first oven ranges from 85 degrees Celsius to 105 degrees Celsius. A drying time for the aluminum foil in the first oven ranges from 2 minutes to 4 minutes.

Specifically, the first oven 432 has a flowing high-temperature air flow. The solvent of the electrode slurry is carried away under the action of the flowing high-temperature air flow, so that the first surface of the aluminum foil may be dried. It should be noted that the first surface of the dried aluminum foil may ensure the stability of the electrode slurry and the ceramic insulating slurry through an air flow cooling system, a tensioning system, a dry film detection system, and a deviation correction structure.

It should be noted that, in the embodiments, after the drying for the aluminum foil is completed by the first oven 432, the dry film surface density detection for the dried aluminum foil may be performed by the surface density meter, so that problems that may occur in the coating process, such as uneven coating, thickness deviation, etc., may be found in time. Each batch of products may be ensured to meet the standards. Furthermore, according to the measurement results, parameters of the coating device, such as coating speed, slurry supply amount, coating pressure, etc., may be adjusted in real time to optimize the coating effect. In addition, a guide roller or a tension separation roller may be provided between the first oven 432 and the second-sided coating assembly 44. The aluminum foil passing through the first oven 432 may be separated from the subsequent process by the guide roller or the tension separation roller, so that the tension at the outlet of the first oven 432 and the tension in the subsequent process may be independently controlled to avoid mutual interference.

It can be understood that combining the electrode slurry coating process and the ceramic insulating slurry coating process may reduce the production cost, shorten the production cycle and reduce the waste of resources.

Further, at step S30, after the detection for the aluminum foil is completed by the surface density meter, the aluminum foil may be sequentially fed to the third deviation correction structure 473 and the second-sided coating mechanism 441 by the conveyor belt. The third deviation correction structure 473 is configured to detect whether the aluminum foil is misaligned when transported on the conveyor belt between the first oven 432 and the second-sided coating mechanism 441, and to adjust the deviation of the conveyor belt.

At step S40, the aluminum foil enters the second-sided coating assembly 44, the electrode slurry and the ceramic insulating slurry are sequentially coated on the second surface of the aluminum foil by the second-sided coating assembly 44 after the coating of the carbon coating layer is completed, and the second surface of the aluminum foil is dried after the coating of the electrode slurry is completed, and then the aluminum foil is fed into the winding mechanism 45.

Specifically, step S40 includes the following steps S41 and S42.

At step S41, the aluminum foil enters the second-sided coating mechanism 441, the electrode slurry and the ceramic insulating slurry are sequentially coated on the second surface of the aluminum foil by the second-sided coating mechanism 441 after the coating of the electrode slurry is completed, and then the aluminum foil is fed into the second oven 442.

Specifically, the coating method of the electrode slurry includes, but is not limited to, one of transfer coating, extrusion coating, or wet coating. The second-sided coating mechanism 441 may include a second die. The second die may be divided into two regions, one region may be used for the whole surface coating of the electrode slurry, and the other region may be used for the edge coating of the ceramic insulating slurry. The two regions may be separated by a fluid isolation structure, ensuring that the two materials do not mix within the second die.

It should be noted that, in the embodiments, after the coating of the electrode slurry and the ceramic insulating slurry on the second surface of the aluminum foil is completed by the second-sided coating mechanism 431, the wet film surface density detection may be performed for the second surface of the coated aluminum foil by the surface density meter, so that problems that may occur in the coating process, such as uneven coating, thickness deviation, etc., may be found in time. Each batch of products may be ensured to meet the standards. Furthermore, according to the measurement results, parameters of the coating device, such as coating speed, slurry supply amount, coating pressure, etc., may be adjusted in real time to optimize the coating effect.

At step S42, the aluminum foil enters the second oven 442, the second surface of the coated aluminum foil is dried by the second oven 442, and then the coated aluminum foil is introduced into the winding mechanism 45 by a guide roller.

A drying temperature of the second oven ranges from 90 degrees Celsius to 115 degrees Celsius. A drying time for the aluminum foil in the second oven ranges from 2 minutes to 4 minutes.

Specifically, the second oven 432 has a flowing high-temperature air flow. The solvent of the electrode slurry is carried away under the action of the flowing high-temperature air flow, so that the second surface of the aluminum foil may be dried. It should be noted that the second surface of the dried aluminum foil may ensure the stability of the electrode slurry and the ceramic insulating slurry through an air flow cooling system, a tensioning system, a dry film detection system, and a deviation correction structure.

It can be understood that in the embodiments, the electrode slurry is coated on the carbon coating layer on the first surface of the aluminum foil by the first-sided coating assembly 43, and the first surface of the coated aluminum foil is dried. The electrode slurry is coated on the carbon coating layer on the second surface of the aluminum foil by the second-sided coating assembly 44, and the second surface of the coated aluminum foil is dried. Since the electrode slurry is coated on the dried carbon coating layer in the embodiments, even if the solvent system of the carbon coating slurry is different from the solvent system of the electrode slurry, there will be no direct contact between the two slurries. The chemical reaction and incompatibility problems between the two slurries may be avoided. That is, a step-by-step coating technique in the embodiments allows different solvent systems to be used on the carbon coating slurry and the electrode slurry. The demands for material compatibility may be reduced.

It should be noted that the carbon coating slurry is an aqueous system, and the electrode slurry is an oily system. The difference between the solvent system of the carbon coating slurry and the solvent system of the electrode slurry is merely for illustration. In the embodiments, since the electrode slurry is coated on the dried carbon coating layer, the carbon coating slurry has no influence on the coating of the electrode slurry, so that the solvent system of the carbon coating slurry and the solvent system of the electrode slurry may be the same. In another embodiments, both of the solvent systems of the carbon coating slurry and the electrode slurry may be oily systems, that is, the solvent system of the carbon coating layer and the solvent system of the electrode slurry are not specifically limit in the embodiments.

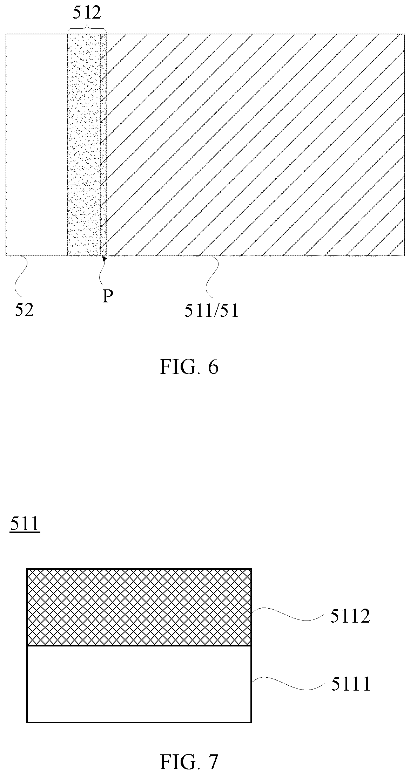

Please combine FIG.s 6 and 7, FIG. 6 is a top view of the battery aluminum foil provided by some embodiments of the present disclosure after a double-sided coating process is completed. FIG. 7 is a schematic structural view of a coating main layer provided by some embodiments of the present disclosure.

It should be noted that FIG. 6 may be a top view of a first surface of the aluminum foil or a top view of a second surface of the aluminum foil, and the embodiments is not particularly limited thereto.

The aluminum foil includes a coating layer 51 and a foil exposed part 52. The coating layer 51 includes a coating main layer 511 and a ceramic insulating layer 512. The coating main layer 5111 includes a carbon coating layer 5111 and an electrode layer 5112 disposed in a stack. The ceramic insulating layer 512 is located between the coating main layer 511 and the foil exposed part 52.

The electrode slurry coating process and the ceramic insulating slurry coating process of the aluminum foil are combined in the embodiments, and the solvent system of the ceramic insulating slurry is the same as the solvent system of the electrode slurry. Therefore, when the electrode slurry and the ceramic insulating slurry are sequentially coated on the first surface of the aluminum foil, there is a contact fusion layer between the electrode slurry and the ceramic insulating slurry. The carbon layer coating process and the electrode slurry coating process are completed separately, and when the electrode slurry is coated on the first surface of the aluminum foil, the carbon coating slurry has been dried. Therefore, there is no contact fusion layer between the electrode slurry and the carbon coating slurry on the first surface of the aluminum foil.

An overlapping portion P is provided at the overlap position between ceramic insulating layer 512 and the coating layer 51. The overlapping portion P is a contact fusion layer between the electrode slurry and the ceramic insulating slurry. Along a direction of the overlapping part P pointing towards the coating layer 51, a width of the overlapping portion P ranges from 0 mm to 0.5 mm, and a width of the ceramic insulating layer 512 ranges from 2.6 mm to 3.2 mm.

Further, at step S40, after the aluminum foil is dried by the second oven 442, the aluminum foil may be sequentially fed to the fourth deviation correction structure and the winding mechanism 45 by the conveyor belt. The fourth deviation correction structure is configured to detect whether the aluminum foil is misaligned when transported on the conveyor belt between the second oven 442 and the winding mechanism 45, and to adjust the deviation of the conveyor belt.

At step S50, the aluminum foil is wound by the winding mechanism 45, and the coating of the aluminum foil is completed.

It can be understood that, compared with the disadvantage of higher cost caused by directly purchasing carbon-coated aluminum foil for electrode slurry coating, the embodiments of the present disclosure integrate the unwinding mechanism 41, the double-sided carbon layer coating mechanism 421, the drying mechanism 422, the first-sided coating mechanism 431, the first oven 432, the second-sided coating mechanism 441, the second oven 442, and the winding mechanism 45 on one production line, which saves space and reduces the occupied area of the device. In addition, the production cost may be reduced by a continuous and efficient production process. The production cycle may be shortened. The waste of resources may be reduced. The waste of the device and human resources may be reduced, and the production cost may be reduced.

Further, referring to a comparative example 1 below, which is a coating method of the battery aluminum foil in the related art.

Comparative Example 1

### Referring to FIG. 1 and FIG. 2, the coating method of the battery aluminum foil of the comparative example 1 includes the following steps D10 to D20.

At step D10, the aluminum foil is sequentially fed into a first aluminum foil unwinding mechanism 11, an aluminum foil corona mechanism 12, an aluminum foil first-sided carbon layer coating mechanism 13, a first aluminum foil oven 14, an aluminum foil second-sided carbon layer coating mechanism 15, a second aluminum foil oven 16, and a first aluminum foil winding mechanism 17, thereby completing the carbon layer coating process on both sides of the aluminum foil.

Specifically, in the related art, the coating speed of the carbon layer ranges from 180 m/min to 200 m/min. The temperature of the first aluminum foil oven ranges from 85 degrees Celsius to 105 degrees Celsius. The drying time of the first-sided of the aluminum foil in the first aluminum foil oven is 0.1 minutes. The coating speed on the second surface of the aluminum foil is consistent with the coating speed on the second surface of the aluminum foil. It takes at least 50 minutes in condition that the carbon layer is coated on the aluminum foil with 10,000 meters. The winding transfer time is more time-consuming, and the factory that completes the coating of the carbon layer is needed to be separated from the factory that completes the coating of the electrode slurry. The time consumed in the transportation process of the aluminum foil takes at least 30 minutes.

At step D20, the aluminum foil having completed the carbon layer coating process on both sides is sequentially fed into a second aluminum foil unwinding mechanism 21, an aluminum foil first-sided electrode slurry coating mechanism 22, a third aluminum foil oven 23, an aluminum foil second-side electrode slurry coating mechanism 24, a fourth aluminum foil oven 25, and a second aluminum foil winding mechanism 26, thereby completing the electrode slurry coating process on both sides of the aluminum foil.

Specifically, in the related art, coating speed of the electrode slurry is 40 m/min. The drying time for the first surface of the aluminum foil in the first aluminum foil oven ranges from 2 minutes to 4 minutes. The drying time on the second surface of the aluminum foil in the second aluminum foil oven ranges from 2 minutes to 4 minutes.

In the comparative example 1, the carbon layer coating process and the electrode slurry coating process are completed separately. The time for completing the carbon layer coating process on both sides of the aluminum foil includes

a time for coating the first-sided of the aluminum foil, a time for drying the aluminum foil first-sided carbon layer coating slurry, a time for coating the aluminum foil second-sided carbon layer coating slurry, a time for drying the aluminum foil second-sided carbon layer coating slurry, a time for transporting the aluminum foil coated having completed the double-sided carbon layer coating from the carbon layer coating factory to the electrode slurry coating factory, a time for coating the aluminum foil first-sided electrode slurry, a time for drying the aluminum foil first-sided electrode slurry, a time for coating the aluminum foil second-sided electrode slurry, and a time for drying the aluminum foil second-sided electrode slurry. Specifically, in the related art, it takes at least 330 minutes for the aluminum foil to complete the double-sided carbon layer coating process and the double-sided electrode slurry coating process.

By comparison, it can be seen that in the battery aluminum foil coating method provided in the embodiments of the present disclosure, the aluminum foil passes through the unwinding mechanism, the double-sided carbon layer coating mechanism 421, the drying mechanism, the first-sided coating mechanism 431, the first oven 432, the second-sided coating mechanism 441, the second oven 442, and the winding mechanism 45 in sequence, so that the double-sided coating for the aluminum foil may be realized by just one unwinding and one winding. The cumbersome operation is effectively reduced. Manual handling for the aluminum foil material is avoided, and manpower is saved. Moreover, by integrating the process of coating the carbon coating slurry and the process of coating the motor slurry into one production line, while the time of transporting the aluminum foil coated with the double-sided carbon layer from the carbon layer coating factory to the electrode slurry coating factory is saved, the production cost is reduced. The production cycle may be shortened. The waste of resources may be reduced, and the land space may be saved.

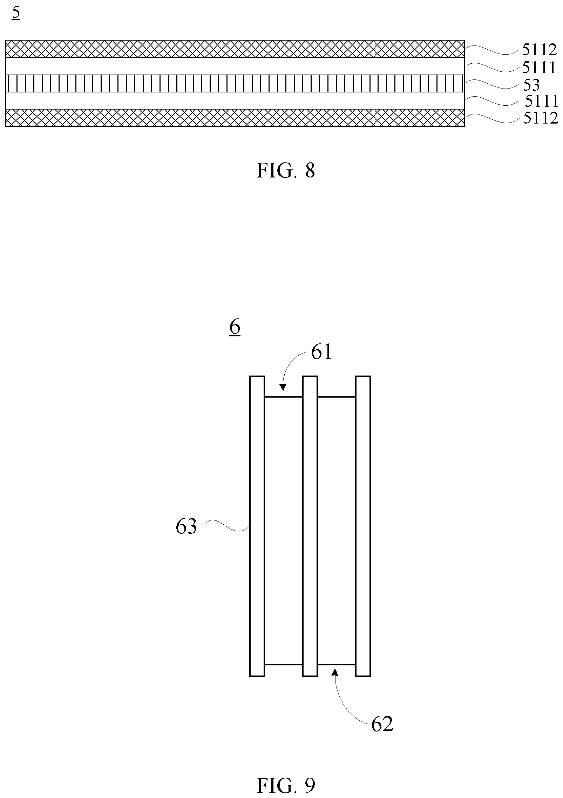

Referring to FIG. 8, which is a schematic structural view of a current collector provided by some embodiments of the present disclosure.

The embodiments of the present disclosure further provide a current collector 5. The current collector 5 includes an aluminum foil, and the aluminum foil may be produced by the battery aluminum foil coating method described above.

Specifically, the current collector 5 includes a metal layer 53 and two coating layers 51 provided on both surfaces of the metal layer 53, respectively. The metal layer 53 may be the aluminum foil. The coating layer 51 includes a carbon coating layer 5111 and an electrode layer 5112 in a stack. The coating layer 51 may be coated onto the aluminum foil by the battery aluminum foil coating method described above. The battery aluminum foil coating method has been described in detail in the above-described embodiments, and the description thereof will not be repeated here.

It can be understood that the current collector 5 adopts the double-sided coating process of carbon coating slurry and electrode slurry, which may improve the conductivity of the surfaces of the aluminum foil. The addition of the carbon coating layer 5111 provides excellent static conductivity for the current collector. The micro-current generated in the electrode material may be can more effectively collected. The conductivity of the battery may be improved, which has a positive promotion effect on the charge and discharge efficiency, cycle life and overall performance of the battery. Moreover, the solvent system of the carbon coating slurry is different from that of the electrode slurry, which may improve the flexibility of material selection. The process is no longer limited to materials from the same system, which helps to develop batteries that are more suitable for various application scenarios. The application scope of technology may be expanded.

Referring to FIG. 8 and FIG. 9, FIG. 9 is a schematic structural view of a battery provided by some embodiments of the present disclosure.

The embodiments of the present disclosure further provide a battery 6. The battery includes a positive electrode plate 61 and a negative electrode plate 62. The positive electrode plate 61 includes a positive electrode current collector and a positive electrode active material. The negative electrode plate 62 includes a negative electrode current collector. At least one of the positive electrode current collector and the negative electrode current collector may be the current collector described in any of the above embodiments.

Specifically, the battery 6 includes a positive electrode plate 61, a negative electrode plate 62, and a separator 63 provided between the positive electrode plate 61 and the negative electrode plate 62. The positive electrode plate, the negative electrode plate 62, and the separator 63 as a whole may be a laminated cell or a wound cell. The battery 6 includes, but is not limited to, one of a soft pack battery, a prismatic battery, or a cylindrical battery.

It should be noted that, in the embodiments, the technical solution of the present disclosure is illustrated by taking the electrode slurry as a positive electrode slurry as an example, that is, in the embodiments, the positive electrode current collector is the current collector described in any of the above embodiments.

It can be understood that the current collector may be used as the core assembly of the positive electrode plate and the negative electrode plate of the battery, which may directly affect the charge and discharge performance, energy density and cycle life of the battery. In the embodiments, the conductivity and mechanical properties of the current collector may be improved by coating the carbon coating slurry and the electrode slurry on both sides. More stable and efficient support for the battery may be provided. The overall performance of the battery may be improved.

## Claims

1. A battery aluminum foil coating device (4), **characterized by** comprising:
an unwinding mechanism (41) configured to unwind an aluminum foil;
a double-sided coating assembly (42) configured to coat a first carbon coating slurry on a first surface of the aluminum foil, to coat a second carbon coating slurry on a second surface of the aluminum foil, and to dry the first surface and the second surface;
a first-sided coating assembly (43) configured to sequentially coat a first electrode slurry and a first ceramic insulating slurry on the first surface, and to dry the first surface;
a second-sided coating assembly (44) configured to sequentially coat a second electrode slurry and a second ceramic insulating slurry on the second surface, and to dry the second surface; and
a winding mechanism (45) configured to wind the aluminum foil.

2. The battery aluminum foil coating device (4) of claim 1, **characterized in that** the double-sided coating assembly (42) is located between the unwinding mechanism (41) and the first-sided coating assembly (43), and the double-sided coating assembly (42) comprises a double-sided carbon layer coating mechanism (421) and a drying mechanism (422) connected in sequence; and
the first-sided coating assembly (43) is located between the double-sided coating assembly (42) and the second-sided coating assembly (44), the first-sided coating assembly (43) comprises a first-sided coating mechanism (431) and a first oven (432) connected in sequence, and the second-sided coating assembly (44) comprises a second-sided coating mechanism (441) and a second oven (442) connected in sequence.

3. The battery aluminum foil coating device (4) of claim 2, **characterized in that** the first-sided coating mechanism (431) is configured to sequentially coat the first electrode slurry and the first ceramic insulating slurry on the first surface, and the first oven (432) is configured to dry the first surface; and
the second-sided coating mechanism (441) is configured to sequentially coat the second electrode slurry and the second ceramic insulating slurry on the second surface, and the second oven (442) is configured to dry the second surface.

4. The battery aluminum foil coating device (4) of claim 2, **characterized in that** the double-sided carbon layer coating mechanism (421) comprises:
a housing (4213);
a first carbon layer coating mechanism (4211) located in the housing (4213), configured to coat the first carbon coating slurry on the first surface; and
a second carbon layer coating mechanism (4212) located in the housing (4213), configured to coat the second carbon coating slurry on the second surface.

5. The battery aluminum foil coating device (4) of claim 2, **characterized in that** the battery aluminum foil coating device (4) further comprises a plurality of deviation correction mechanisms (47);
one of the plurality of deviation correction mechanisms (47) is provided between the unwinding mechanism (41) and the double-sided coating assembly (42), and/or
one of the plurality of deviation correction mechanisms (47) is provided between the drying mechanism (422) and the first-sided coating mechanism (431), and/or
one of the plurality of deviation correction mechanisms (47) is provided between the first oven (432) and the second-sided coating mechanism (441), and/or
one of the plurality of deviation correction mechanisms (47) is provided between the second oven (442) and the winding mechanism (45).

6. The battery aluminum foil coating device (4) of claim 2, **characterized in that** the drying mechanism (422) is located between the double-sided carbon layer coating mechanism (421) and the first-sided coating mechanism (431), and a heat source of the drying mechanism (422) is at least one of steam, an electric heater, infrared, or microwave;
optionally, the drying mechanism (422) comprises an oven and a plurality of infrared heating elements located in the oven, the plurality of infrared heating elements are mounted on a top and a bottom of the oven.

7. A battery aluminum foil coating method, **characterized by** comprising at least following steps:
unwinding an aluminum foil by an unwinding mechanism (41);
coating a first carbon coating slurry and a second carbon coating slurry on a first surface and a second surface of the aluminum foil, respectively, and simultaneously drying the first surface coated with the first carbon coating slurry and the second surface coated with the second carbon coating slurry by a double-sided coating assembly (42) to form a first carbon coating layer and a second carbon coating layer, respectively;
sequentially coating a first electrode slurry and a first ceramic insulating slurry on the first carbon coating layer, and drying the first surface coated with the first electrode slurry and the first ceramic insulating slurry by a first-sided coating assembly (43);
sequentially coating a second electrode slurry and a second ceramic insulating slurry on the second carbon coating layer, and drying the second surface coated with the second electrode slurry and the second ceramic insulating slurry by a second-sided coating assembly (44); and
winding the aluminum foil by a winding mechanism (45).

8. The battery aluminum foil coating method of claim 7, **characterized in that** a step of coating the first carbon coating slurry and the second carbon coating slurry on the first surface and the second surface of the aluminum foil, respectively, and simultaneously drying the first surface coated with the first carbon coating slurry and the second surface coated with the second carbon coating slurry by the double-sided coating assembly (42) to form the first carbon coating layer and the second carbon coating layer, respectively, comprises:
coating the first carbon coating slurry on the first surface by a first carbon layer coating mechanism (4211);
coating the second carbon coating slurry on the second surface by a second carbon layer coating mechanism (4212); and
simultaneously drying the first surface coated with the first carbon coating slurry and the second surface coated with the second carbon coating slurry by a drying mechanism (422) to form the first carbon coating layer and the second carbon coating layer, respectively;
optionally, a drying temperature of the drying mechanism (422) ranges from 70 degrees Celsius to 170 degrees Celsius, and a drying time of the drying mechanism (422) ranges from 3 seconds to 9 seconds.

9. The battery aluminum foil coating method of claim 8, **characterized in that** a step of sequentially coating the first electrode slurry and the first ceramic insulating slurry on the first carbon coating layer, and drying the first surface coated with the first electrode slurry and the first ceramic insulating slurry by the first-sided coating assembly (43) comprises:
sequentially coating the first electrode slurry and the second ceramic insulating slurry on the first carbon coating layer by a first-sided coating mechanism (431); and
drying the first surface coated with the first electrode slurry and the first ceramic insulating slurry by a first oven (432);
optionally, a drying temperature of the first oven (432) ranges from 85 degrees Celsius to 105 degrees Celsius, and a drying time for the aluminum foil in the first oven (432) ranges from 2 minutes to 4 minutes.

10. The battery aluminum foil coating method of claim 9, **characterized in that** a step of sequentially coating the second electrode slurry and the second ceramic insulating slurry on the second carbon coating layer, and drying the second surface coated with the second electrode slurry and the second ceramic insulating slurry by the second-sided coating assembly (44) comprises:
sequentially coating the second electrode slurry and the second ceramic insulating slurry on the second carbon coating layer by a second-sided coating mechanism (441); and
drying the second surface coated with the second electrode slurry and the second ceramic insulating slurry by a second oven (442);
optionally, a drying temperature of the second oven (442) ranges from 90 degrees Celsius to 115 degrees Celsius, and a drying time for the aluminum foil in the second oven (442) ranges from 2 minutes to 4 minutes.

11. The battery aluminum foil coating method of claim 7, **characterized in that** solvent systems of the first carbon coating slurry and the second carbon coating slurry are different from solvent systems of the first electrode slurry and the second electrode slurry; and/or
solvent systems of the first ceramic insulating slurry and the second ceramic insulating slurry are same as solvent systems of the first electrode slurry and the second electrode slurry; and/or
the first electrode slurry and the second electrode slurry comprise an active material, a binder, a dispersant, a conductive agent, and an organic solvent, the active material is lithium iron phosphate, the binder is polyvinylidene fluoride, the dispersant is a positive electrode material dispersant, the dispersant is a positive electrode material dispersant, the conductive agent is carbon nanotubes, and the organic solvent is n-methyl pyrrolidone.

12. The battery aluminum foil coating method of claim 7, **characterized in that** a coating method for the first carbon coating slurry and the first carbon coating slurry is gravure transfer coating, and a coating method for the first electrode slurry and the second electrode slurry is one of transfer coating, extrusion coating, and wet coating.

13. The battery aluminum foil coating method of claim 7, **characterized in that** viscosities of the first electrode slurry and the second electrode slurry range from 5,000 mPa·s to 25,000 mPa·s, and viscosities of the first ceramic insulating slurry and the second ceramic insulating slurry range from 1,000 mPa·s to 7,000 mPa·s; and
solid contents of the first electrode slurry and the second electrode slurry range from 60% to 70%, and solid contents of the first ceramic insulating slurry and the second ceramic insulating slurry range from 30% to 38%.

14. A current collector (5), comprising an aluminum foil, **characterized in that** the aluminum foil is manufactured by the battery aluminum foil coating method of any one of claims 7 to 13;
optionally, the current collector (5) comprises a metal layer (53) and two coating layers (51) located on both sides of the metal layer, respectively; and the metal layer (53) is the aluminum foil, and each of the two coating layers (51) comprises a carbon coating layer (5111) and an electrode layer (5112) disposed stacked in sequence.

15. A battery (6), **characterized in that** the battery (6) comprises a positive electrode plate (61) and a positive electrode plate (62), the positive electrode plate (61) comprises a positive electrode current collector and a positive electrode active material, and the negative electrode plate (62) comprises a negative electrode current collector; and wherein at least one of the positive electrode current collector and the negative electrode current collector is the current collector (5) of claim 14.
